# EUROPÄISCHE PATENTSCHRIFT

(11) **EP 3 105 157 B1**
(45) Veröffentlichungstag und Bekanntmachung des Hinweises auf die Patenterteilung: **17.11.2021**
(21) Anmeldenummer: 15705493.3
(22) Anmeldetag: 03.02.2015
(51) Int. Cl.: B65G 49/04

(54) **TAUCHBEHANDLUNGSANLAGE MIT EINER EINRICHTUNG ZUM DREHEN DER ZU BEHANDELNDEN GEGENSTÄNDE**
DIP COATING SYSTEM COMPRISING A DEVICE FOR ROTATING THE ARTICLE TO BE TREATED
SYSTÈME DE TRAITEMENT PAR IMMERSION COMPORTANT UN MOYEN POUR FAIRE TOURNER LES OBJETS À TRAITER

(30) Priorität: 14.02.2014 DE 102014001878
(43) Veröffentlichungstag der Anmeldung: 21.12.2016
(73) Patentinhaber: Eisenmann GmbH, 71032 Böblingen (DE)
(72) Erfinder: BRAUN, Jürgen, 72149 Neustetten (DE)
(74) Vertreter: Ostertag & Partner Patentanwälte mbB
(86) Internationale Anmeldenummer: PCT/EP2015/000197
(87) Internationale Veröffentlichungsnummer: WO 2015/120962

(56) Entgegenhaltungen:
- DE-A1-102004 024 614
- DE-C2- 19 641 048
- US-A- 3 200 052
- US-A- 3 585 734
- US-A1- 2002 162 504

## Beschreibung

Die Erfindung betrifft eine Tauchbehandlungsanlage mit
a) mindestens einem Tauchbecken, welches mit einer Behandlungsflüssigkeit, insbesondere mit flüssigem Lack, füllbar ist, in welche die zu behandelnden Gegenstände, insbesondere Fahrzeugkarosserien, eingetaucht werden können;
b) einem Fördersystem, welches die zu behandelnden Gegenstände an das Tauchbecken heran, in den Innenraum des Tauchbeckens hinein, aus dem Tauchbecken heraus und von diesem weg bewegen kann und umfasst:
   ba) mindestens einen Transportwagen, der eine um eine Drehachse verdrehbare Befestigungseinrichtung aufweist, an welcher mindestens ein Gegenstand befestigbar ist;
   bb) eine Dreheinrichtung, mit welcher die Befestigungseinrichtung in bestimmten Abschnitten des Bewegungsweges des Transportwagens verdrehbar ist;
   bc) mindestens eine angetriebene, sich parallel zum Bewegungsweg des Transportwagens erstreckende Zugkette.

Eine derartige Tauchbehandlungsanlage ist in der DE 106 41 048 C2 beschrieben. Die Dreheinrichtung umfasst hier an jedem Transportwagen, dort "Drehgestell" genannt, verhältnismäßig lange, von der Drehachse radial nach außen geführte Arme oder Hebel, die in den entsprechenden Abschnitten des Bewegungsweges der Transportwagen mit stationären Kulissenführungen zusammenwirken. Diese Dreheinrichtung ist mechanisch sehr aufwendig,

Eine weitere Tauchbehandlungsanlage ist aus der DE 10 2004 024 61 A1 bekannt. Bei dieser Anlage wird die Drehbewegung der Drehwelle mittels eines Kettengetriebes, das am Transportwagen angeordnet ist und mittels einer Zahnstangen-Ritzel-Paarung über die von der Kette eingeleitete Förderbewegung des Transportwagens angetrieben wird, ermöglicht.

Aufgabe der vorliegenden Erfindung ist es, eine Tauchbehandlungsanlage der eingangs genannten Art so auszugestalten, dass die Drehung, welcher die Befestigungseinrichtungen unterzogen werden müssen, auf mechanisch einfache und gegebenenfalls einfach zu steuernde Weise zuverlässig erfolgen kann.

Diese Aufgabe wird erfindungsgemäß dadurch gelöst, dass
c) die Dreheinrichtung umfasst:
ca) mindestens ein mit der Befestigungseinrichtung drehschlüssig verbindbares Kettenrad, welches koaxial zur Drehachse der Befestigungseinrichtung angeordnet ist;
cb) mindestens eine sich parallel zur Bewegungsrichtung des Transportwagens erstreckende Drehkette, mit welcher das Kettenrad kämmt.

Die erfindungsgemäß eingesetzte Dreheinrichtung ist aus sehr einfachen Komponenten aufgebaut, die auch größere Kräfte zuverlässig übertragen können, ohne dass es zu mechanischen Verformungen und damit Dejustierungen kommt. Die Abschnitte entlang des Bewegungsweges der Transportwagen, an denen eine Drehung der Befestigungseinrichtung stattfinden soll, lassen sich problemlos wählen und gegebenenfalls auch nachträglich wieder verändern.

Gemäß der Erfindung erstreckt sich die Drehkette in Bewegungsrichtung des Transportwagens über einen Abschnitt, in dem eine Drehbewegung erfolgen soll, hinaus, wobei eine verstellbare Kupplung vorgesehen ist, welche in einer ersten Stelle keine Drehverbindung zwischen Kettenrad und Befestigungseinrichtung und in einer zweiten Stellung eine Drehverbindung zwischen Kettenrad und Befestigungseinrichtung in einem ersten Drehsinne herstellt. Die Drehkette kann sich über eine große Entfernung hinweg entlang des Bewegungsweges des Transportwagens erstrecken, beispielsweise über die gesamte Anlagenlänge hinweg oder auch über die Gesamtlänge eines einzelnen Tauchbeckens. Solange die Kupplung nicht eingerückt ist, dreht sich zwar das Kettenrad. Mangels Drehverbindung zur Befestigungseinrichtung drehen letztere und damit der zu behandelnde Gegenstand aber nicht mit. Nur in denjenigen Bereichen, in denen die Kupplung tatsächlich eingerückt ist, findet eine Drehbewegung statt. Durch Wahl der Stellen entlang des Bewegungsweges, in denen die Kupplung ein- bzw. ausgerückt wird, lässt sich in einfachster Weise die Position der Drehbewegung bestimmen und gegebenenfalls nachträglich auch wieder verändern.

Die Kupplung besitzt auch eine dritte Stellung, in der zwischen dem Kettenrad und der Befestigungseinrichtung eine Drehverbindung in einem zweiten, dem ersten Drehsinn entgegengesetzten Drehsinn hergestellt ist. Dies bedeutet insbesondere, dass der Eindrehvorgang und der Ausdrehvorgang des zu behandelnden Gegenstandes in die Behandlungsflüssigkeit wahlweise in unterschiedlichen Drehsinnen erfolgen kann.

Zweckmäßig ist, wenn die Kupplung über eine Kupplungsstange betätigbar ist, welche mit mindestens einer Kulissenführung zusammenwirkt, die stationär an einem Abschnitt des Bewegungsweges des Transportwagens angeordnet ist, in dem eine Drehung erfolgen soll. Die Einleitung einer Drehbewegung erfolgt also voll mechanisch. Der Ort, an dem dies geschieht, wird ausschließlich durch den Ort bestimmt, an dem die Kulissenführung vorgesehen ist. Dieser lässt sich bei Bedarf auch leicht verändern.

Dabei kann es von Nutzen sein, wenn die Kulissenführung aus einer Position, in der sie mit der Kupplungsstange zusammenwirkt, in eine Position bewegt werden kann, in der sie nicht mit der Kupplungsstange zusammenwirkt.

Auf diese Weise lässt sich bestimmen, ob an einer Stelle, an welcher eine Kulissenführung vorgesehen ist, tatsächlich eine Drehung erfolgt oder nicht. Beispielsweise können so einzelne Bäder überfahren oder leere Transportwagen ohne Drehung weiterbefördert werden.

Derselbe Vorteil ergibt sich bei der Ausführungsform der Erfindung, bei welcher die Kupplungsstange aus einer Position, in der sie mit der Kulissenführung zusammenwirkt, in eine Positon bewegt werden kann, in der sie nicht mit der Kulissenführung zusammenwirkt.

Bei einer anderen, nicht erfindungsgemäßen Tauchbehandlungsanlage ist die Drehkette oder die Drehzahnstange nur in solchen Abschnitten des Bewegungsweges des Transportwagens vorgesehen, an denen eine Drehung erfolgen soll. Zwischen den fraglichen Abschnitten des Bewegungsweges dreht sich also das Ketten- oder Zahnrad und damit der zu behandelnde Gegenstand mangels Drehkette oder Drehzahnstange nicht. Eine besondere Kupplung oder sonstige Steuerungsmaßnahmen sind nicht erforderlich.

Besonders variabel ist diejenige Ausführungsform der Erfindung, bei der die Drehkette in Längsrichtung bewegbar ist. Die Drehgeschwindigkeit der Dreheinrichtung hängt dann von der Differenz der Geschwindigkeiten der Zugkette einerseits und der Drehkette andererseits ab. Durch Veränderung der Differenz dieser Geschwindigkeiten kann also die Drehgeschwindigkeit leicht verändert werden, wobei auch eine Umkehr des Drehsinnes auch ohne entsprechende Kupplung möglich wird.

Ausführungsbeispiele der Erfindung werden nachfolgend anhand der Zeichnung näher erläutert; es zeigen
- Figur 1: perspektivisch einen Ausschnitt aus einer Tauchbehandlungsanlage ohne zu lackierende Gegenstände;
- Figur 2: eine perspektivische Ansicht, ähnlich der Figur 1, jedoch mit aufmontierten Fahrzeugkarosserien als zu lackierenden Gegenständen;
- Figur 3: einen vertikalen Schnitt durch die Tauchbehandlungsanlage der Figur 1;
- Figur 4: eine Detailvergrößerung aus Figur 1;
- Figur 5: eine Ansicht, ähnlich der Figur 4, von einem zweiten Ausführungsbeispiel einer Tauchbehandlungsanlage;
- Figur 6: eine Ansicht, ähnlich den Figuren 4 und 5, von einer nicht erfindungsgemäßen Tauchbehandlungsanlage.

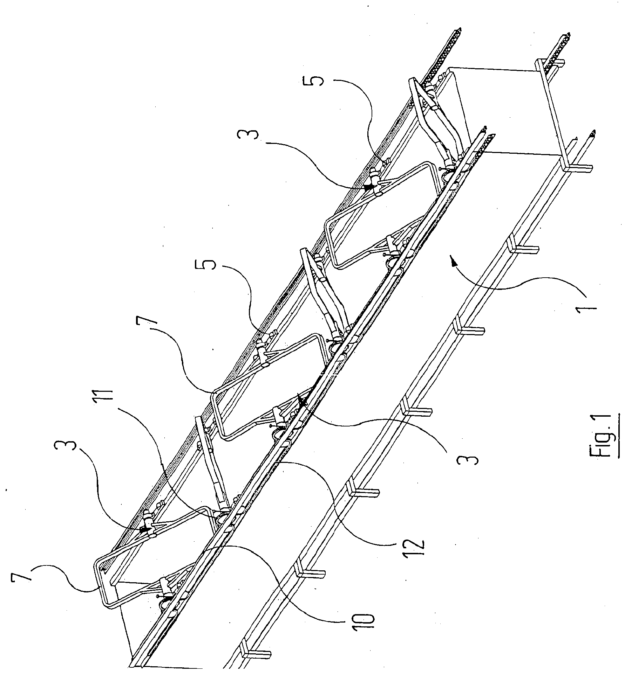

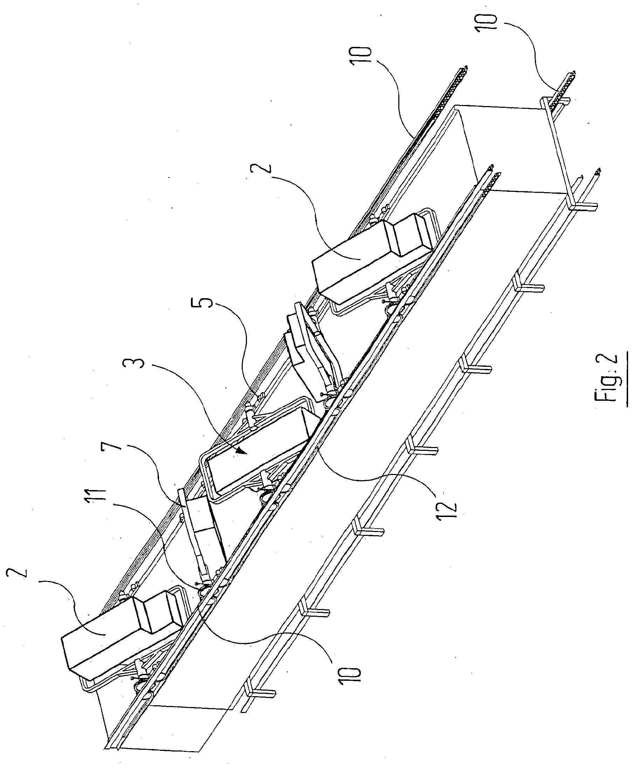

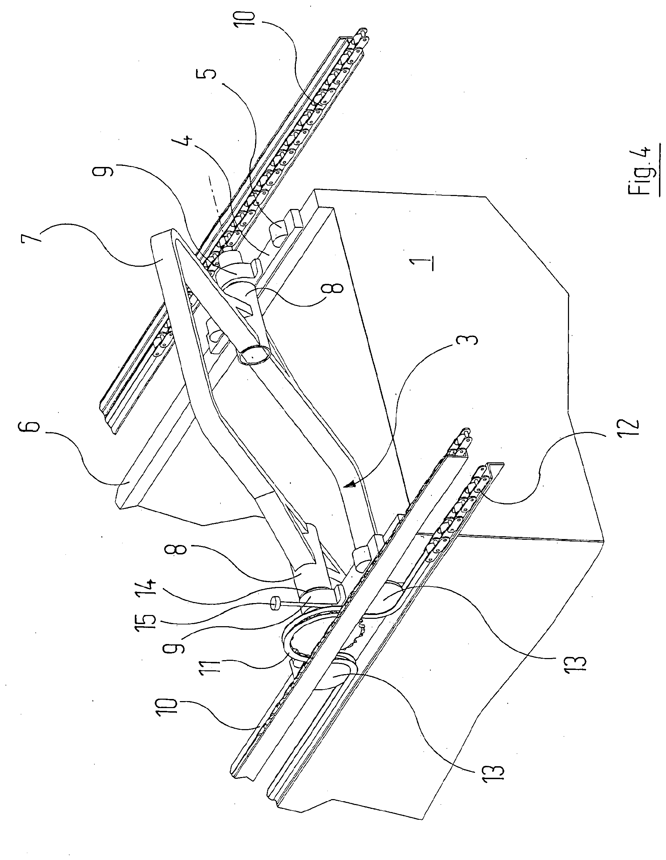

Zunächst wird auf die Figuren 1 und 2 Bezug genommen. In diesen ist ein Tauchbecken 1 erkennbar, welches Teil einer Tauchbehandlungsanlage ist. Eine solche umfasst im Allgemeinen mehrere derartige Tauchbecken 1, die von den zu behandelnden Gegenständen der Reihe nach durchlaufen werden. Zum Transport der zu behandelnden Gegenstände 2, bei denen es sich beispielsweise um Fahrzeugkarosserien (vgl. Figur 2) handeln kann, ist eine Mehrzahl von Transportwagen 3 vorgesehen. Jeder dieser Transportwagen 3 umfasst auf gegenüberliegenden Längsseiten des Tauchbeckens 1 jeweils eine Längstraverse 4 (vgl. insbesondere die Figur 4), in der zwei Rollen 5 drehbar gelagert sind. Die Rollen 5 laufen auf Schienen 6 ab, die im dargestellten Ausführungsbeispiel auf den seitlichen Längswänden des Tauchbeckens 1 angebracht sind. Die Darstellung der Rollen 5 und der Schienen 6 ist schematisch; in der Praxis sind die Rollen 5 an den Schienen 6 durch geeignete, dem Fachmann bekannte Maßnahmen geführt.

Jeder Transportwagen 3 umfasst eine Befestigungseinrichtung, im dargestellten Falle einen Drehrahmen 7, der mit Hilfe von zwei auf gegenüberliegenden Seiten angebrachten Drehwellenstummeln 8 in Lagerböcken 9 an den beiden Längstraversen 4 drehbar gelagert ist. Die zu behandelnden Gegenstände 2 können an dem Drehrahmen 7 in bekannter Weise starr oder in definierter Weise gegenüber diesem beweglich befestigt werden.

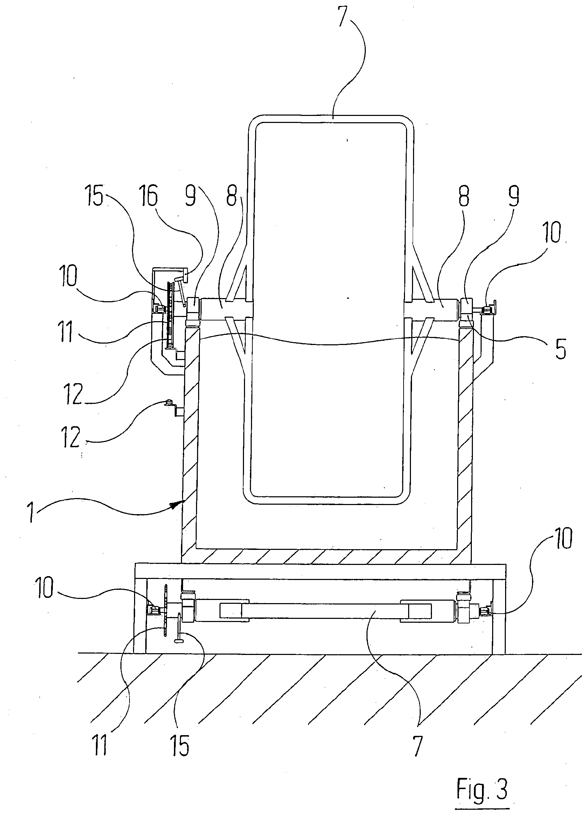

Die äußeren Endbereiche der Drehwellenstummel 8 greifen jeweils in eine Zugkette 10 ein. Dementsprechend erstreckt sich auf beiden gegenüberliegenden Seiten des Tauchbeckens 1, parallel zu deren Längserstreckung, eine derartige Zugkette 10. Die beiden Zugketten 10 verlaufen über die gesamte Anlagenlänge oder zumindest über mehrere Tauchbecken 1 hinweg und werden mit Hilfe eines in der Zeichnung nicht dargestellten Elektromotors und eines von diesem angetriebenen Kettenrades bewegt. Das Rücklauftrum der Zugketten 10 verläuft unterhalb des Tauchbeckens 1 in einem gesonderten Rückführbereich, wie dies der Figur 3 zu entnehmen ist. In diesem Rückführbereich bewegen sich auch die leeren Transportwagen 3 in ihre Ausgangsposition zurück.

Selbstverständlich sind die Bewegungen der beiden Zugketten 10 zu synchronisieren, wie dies dem Fachmann geläufig und auch aus der eingangs genannten DE 196 41 048 C2 bekannt ist.

Die an dem Drehrahmen 7 befestigten zu behandelnden Gegenstände 2 werden an geeeigneten Stellen ihres Bewegungsweges (Translationsbewegung) gemeinsam mit den Drehrahmen 7 um die Achsen der Drehwellenstummeln 8 verdreht und dabei in eine Behandlungsflüssigkeit, beispielsweise einen Lack, eingetaucht, der in das Tauchbecken 1 bis zu einem bestimmten Niveau eingefüllt ist. Im Verlaufe dieser Drehung werden die zu behandelnden Gegenstände 2 vorzugsweise vollständig in die Behandlungsflüssigkeit eingetaucht und bei einer Weiterbewegung wieder aus der Behandlungsflüssigkeit herausgehoben, während gleichzeitig eine Translationsbewegung mit Hilfe der Zugketten 10 stattfindet. All dies ist ebenfalls im Grundsatz in der DE 196 41 048 C2 beschrieben, auf die ergänzend Bezug genommen wird.

Interessant im vorliegenden Zusammenhang ist nun, wie vorliegend abweichend von der DE 196 41 048 C2 die Drehung der verschiedenen Drehrahmen 7 samt zu behandelnder Gegenstände 2 bewirkt wird. Hierzu ist auf den äußeren Endbereich von einem der beiden Drehwellenstummel 8, in Figur 4 vom dem Betrachter zugewandten Drehwellenstummel 8, ein Kettenrad 11 drehschlüssig aufgesetzt. Dieses Kettenrad 11 kämmt mit einer weiteren Kette 12, die aus weiter unten deutlich werdenden Gründen "Drehkette" genannt werden soll. Diese Drehkette 12 verläuft unterhalb der benachbarten Zugkette 10, etwas nach innen seitlich versetzt zu dieser. Die Drehkette 12 erstreckt sich bei dem in Figur 4 dargestellten Ausführungsbeispiel ähnlich wie die Zugkette 10 über die gesamte Anlagenlänge hinweg oder doch zumindest über mehrere Wegabschnitte hinweg, in denen eine Drehung des Drehrahmens 7 erfolgen soll. Das Rücklauftrum der Drehkette 12 ist bei diesem Ausführungsbeispiel an der benachbarten Seitenwand des Tauchbeckens 1 geführt, wie dies der Figur 3 zu entnehmen ist.

Zur besseren Umschlingung des Kettenrades 11 sind beidseits von diesem an dem Transportwagen 7 zwei abgerundete Kettenführungskörper 13 vorgesehen, so dass die Drehkette 12 in einer sog. Omega-Führung das Kettenrad 11 umschließt. Die Kettenführungskörper 13 können auch als freidrehende Kettenräder ausgebildet sein.

Die oben beschriebene Anordnung aus Zugketten 10 und Drehkette 12 führt offensichtlich zu einer Drehung des Drehrahmens 7 dann, wenn Zugketten 10 und Drehkette 12 mit unterschiedlicher Geschwindigkeit betrieben werden. Die Drehgeschwindigkeit des Drehrahmens 7 hängt somit von der Differenz der Geschwindigkeiten von Zugkette 10 und Drehkette 12 ab, wobei auch der Drehsinn umgekehrt werden kann.

Damit der Drehrahmen 7 sich nicht auf dem gesamten Bewegungsweg des Transportwagens 3 über den Tauchbecken 1 und zwischen diesen verdreht, ist in den das Kettenrad 11 tragenden Drehwellenstummel 8 eine Kupplung 14 eingebaut. Diese Kupplung 14 lässt sich mit Hilfe einer Kupplungsstange 15 mechanisch bedienen. Je nach Stellung der Kupplungsstange 15 sind dabei drei Betriebsarten möglich: In einer ersten Betriebsart läuft die Kupplung 15 leer. Es wird somit von dem sich drehenden Kettenrad 11 keine Drehung auf den Drehrahmen 7 übertragen. In einer zweiten Stellung der Kupplungsstange 5 wird die Drehung des Kettenrades 11 in einen ersten Drehsinn auf den Drehrahmen 7, in einer dritten Stellung der Kupplungsstange 15 im entgegengesetzten Drehsinn auf den Drehramen 7 übertragen.

Die Betätigung der Kupplung 14 über die Kupplungsstange 15 geschieht mit Hilfe von Kulissenführungen 16, die im Bewegungsweg der Kupplungsstangen 15 ortsfest dort angebracht sind, wo eine Drehung erfolgen soll.

Die Funktionsweise des in Figur 4 dargestellten Ausführungsbeispieles einer Tauchbehandlungsanlage ist somit wie folgt:
Die mit zu behandelnden Gegenständen 2 beladenen Transportwagen 3 werden, wie in Figur 2 gezeigt, mit Hilfe der Zugketten 10 beispielsweise von links oben kommend über das Tauchbecken 1 geführt. Dabei ist die Kupplung 14 zunächst ausgerückt, so dass keine Drehung der Drehrahmen 7 und der zu behandelnden Gegenstände 2 erfolgt. Die Förderung der zu behandelnden Gegenstände 2 kann dabei insbesondere in horizontaler Ausrichtung erfolgen. Hat der Transportwagen 3 über dem Tauchbecken 1 eine Position erreicht, in der eine Drehung des Drehrahmens 3 erwünscht ist, läuft die Kupplungsstange 15 auf eine an dieser Stelle stationär angebrachte Kulissenführung 16 auf. Die Kupplungsstange 15 wird bewegt und hierdurch die Kupplung 14 so eingerückt, dass eine Drehung des Drehrahmens 7 mit dem daran befestigten zu behandelnden Gegenstand 2 eingeleitet wird.

Die Drehung wird so lange fortgesetzt, bis im Verlaufe der Weiterbewegung des Transportwagens 3 der zu behanelnde Gegenstand 2 vollständig in die Behandlungsflüssigkeit eingetaucht ist, wobei er im Allgemeinen "auf dem Kopf" liegt. Je nach Wunsch kann nunmehr die Kupplung wieder ausgerückt werden, so dass die zu behandelnden Gegenstände 2 über eine gewisse Strecke hinweg in dieser Position durch die Behandlungsflüssigkeit gezogen werden. Dann, gegebenenfalls aber auch direkt an die Eindrehbewegung anschließend, wird durch eine entsprechende Kulissenführung 16 die Kupplung 14 wieder eingerückt, und die Drehbewegung fortgesetzt, bis der zu behandelnde Gegenstand 2 wieder vollständig aus der Behandlungsflüssigkeit ausgetaucht ist.

In der Darstellung der Figur 2 wird beim Ein- und Ausdrehen dieselbe Drehrichtung gewählt. Grundsätzlich ist es aber ohne weiteres denkbar, die Drehrichtung beim Ein- und Austauchen zu wechseln.

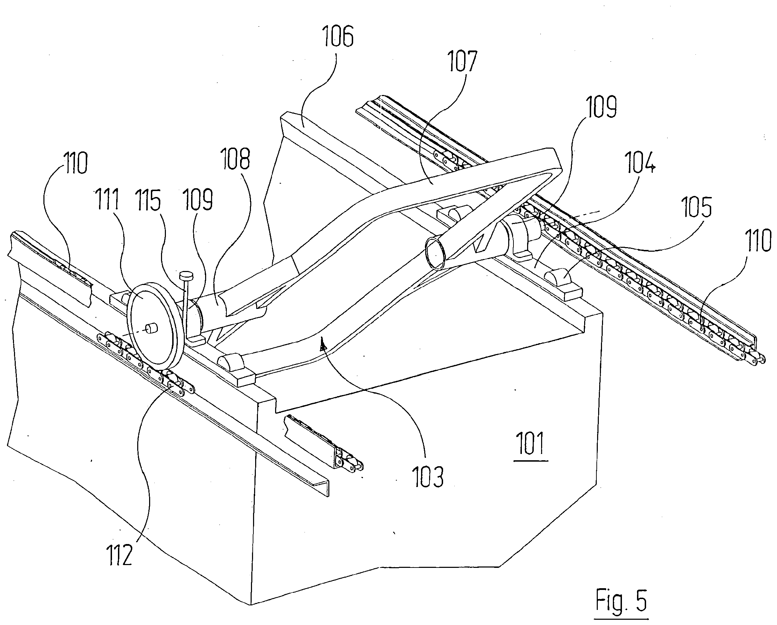

Das in Figur 5 dargestellte Ausführungsbeispiel einer Tauchbehandlungsanlage ähnelt sehr stark demjenigen, das oben anhand der Figur 4 beschrieben wurde. Entsprechende Teile sind daher mit demselben Bezugszeichen zuzüglich Einhundert gekennzeichnet. Der einzige Unterschied zwischen diesen beiden Ausfühungsbeispielen besteht darin, dass bei demjenigen der Figur 5 auf eine Omega-förmige Umschlingung des Kettenrades 111 verzichtet wurde. Das Kettenrad 111 greift somit nur mit seinem unteren Umfangsbereich in die geradlinig geführte Drehkette 112 ein.

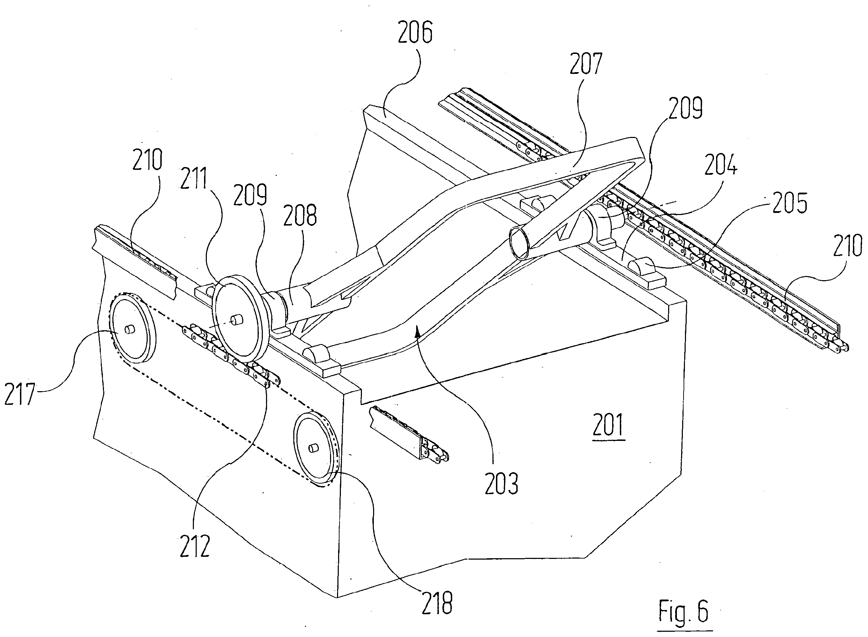

Auch die in Figur 6 dargestellte nicht erfindungsgemäße Tauchbehandlungsanlage stimmt in der Grundfunktion mit den zuvor beschriebenen Ausführungsbeispielen überein. Die entsprechenden Teile sind daher wieder mit demselben Bezugszeichen, erneut noch einmal um Einhundert erhöht, gekennzeichnet. Das Ausführungsbeispiel der Figur 6 ähnelt insofern stärker demjenigen der Figur 5, als hier keine Omega-förmige Umschlingung des Kettenrades 211 vorgesehen ist. Der Unterschied liegt hier darin, dass die Drehkette 212 sich nicht über die Gesamtlänge des Tauchbeckens 201 erstreckt sondern nur über denjenigen Abschnitt in Bewegungsrichtung der Transportwagen 203, in dem eine Drehung des Drehrahmens 203 gewünscht ist. Die Drehkette 212 wird hierzu in der schematisch angedeuteten Weise über zwei Umlenkräder 217, 218 geführt und in geeigneter Weise angetrieben.

Beim Ausführungsbeispiel der Figur 6 wird auf eine Kupplung in dem das Kettenrad 211 tragenden Drehwellenstummel 208 verzichtet. Die Abschnitte im Verlaufe der Translationsbewegung der Transportwagen 203, in denen eine Drehung des Drehrahmens 207 und des daran befestigten zu behandelnden Gegenstandes 2 bewirkt werden soll, wird ausschließlich durch die Position der verhältnismäßig kurzen Drehketten 212 bestimmt: Sobald das Kettenrad 211 im Verlaufe der Translationsbewegung des Transportwagens 203 auf die Drehkette 212 aufläuft, setzt die Drehbewegung ein. Verlässt das Kettenrad 211 die Drehkette 212, kommt die Drehbewegung zum Stillstand. Für die Geschwindigkeit der Drehbewegung und den Drehsinn gilt grundsätzlich dasselbe, was oben für das Ausführungsbeispiel der Figur 4 geschrieben wurde. Grundsätzlich ist es denkbar, statt einer bewegten Drehkette auch eine stationäre Drehkette einzusetzen. Bei dieser einfachen Ausführungsform ist aber eine Einstellung von Drehgeschwindigkeit des Drehgestelles und Drehsinn nicht in der oben geschilderten einfachen Weise möglich.

Die Kulissenführung 16 und/oder die Kupplungsstange 15 können so ausgestalten sein, dass ihre Wechselwirkung wahlweise aktivierbar oder desaktivierbar ist. Dies kann beispielsweise so erreicht werden, dass Kulissenführung und/oder Kupplungsstange aus einer Positon, in der sie vom jeweils anderen Teil erreicht werden können, aus dem Bewegungsweg des jeweils anderen Teils herausgenommen werden. So lassen sich bei Bedarf bestimmte Bäder ohne Drehung überfahren oder bei bestimmten, beispielsweise leeren, Transportwagen eine Drehung des Drehrahmens 7 verhindern.

## Patentansprüche

1. Tauchbehandlungsanlage mit
a) mindestens einem Tauchbecken (1; 101), welches mit einer Behandlungsflüssigkeit, insbesondere mit flüssigem Lack, befüllbar ist, in welche die zu behandelnden Gegenstände (2), insbesondere Fahrzeugkarosserien, eingetaucht werden können;
b) einem Fördersystem (3, 10; 103, 110), welches die zu behandelnden Gegenstände (2) an das Tauchbecken (1; 101) heran, in den Innenraum des Tauchbeckens (1; 101) hinein, aus dem Tauchbecken (1; 101) heraus und von diesem weg bewegen kann und umfasst:
ba) mindestens einen Transportwagen (3; 103), der eine um eine Drehachse verdrehbare Befestigungseinrichtung (7; 107) aufweist, an welcher mindestens ein Gegenstand (2) befestigbar ist;
bb) eine Dreheinrichtung (11, 12; 111, 112), mit welcher die Befestigungseinrichtung (7; 107) in bestimmten Abschnitten des Bewegungsweges des Transportwagens (3) verdrehbar ist;
bc) mindestens eine angetriebene, sich parallel zum Bewegungsweg des Transportwagens (3; 103) erstreckende Zugkette (10; 110); wobei
c) die Dreheinrichtung (11, 12; 111, 112) umfasst:
ca) mindestens ein mit der Befestigungseinrichtung (7; 107) drehschlüssig verbindbares Kettenrad (11; 111; 112), welches koaxial zur Drehachse der Befestigungseinrichtung (7; 107) angeordnet ist;
cb) mindestens eine sich parallel zur Bewegungsrichtung des Transportwagens (3; 103) erstreckende Drehkette (12; 112), mit welcher das Kettenrad (11; 111) kämmt,
wobei sich die Drehkette (12; 112) in Bewegungsrichtung des Transportwagens (3; 103) über einen Abschnitt, in der eine Drehbewegung erfolgen soll, hinaus erstreckt und wobei eine verstellbare Kupplung (14; 114) vorgesehen ist, welche in einer ersten Stellung keine Drehverbindung zwischen Kettenrad (11; 111) und Befestigungseinrichtung (7; 107) und in einer zweiten Stellung eine Drehverbindung zwischen Kettenrad (11; 111) und Befestigungseinrichtung (7; 107) in einem ersten Drehsinn herstellt, und
wobei die Kupplung (14; 114) eine dritte Stellung besitzt, in der zwischen dem Kettenrad (11; 111) und der Befestigungseinrichtung (7; 107) eine Drehverbindung in einem zweiten, dem ersten Drehsinn entgegengesetzten Drehsinn hergestellt ist.

2. Tauchbehandlungsanlage nach Anspruch 1, **dadurch gekennzeichnet, dass** die Kupplung (14; 114) über eine Kupplungsstange (15; 115) betätigbar ist, welche mit mindestens einer Kulissenführung (16) zusammenwirkt, die stationär an einem Abschnitt des Bewegungsweges des Transportwagens (3; 103) angeordnet ist, in dem eine Drehung erfolgen soll.

3. Tauchbehandlungsanlage nach Anspruch 2, **dadurch gekennzeichnet, dass** die Kulissenführung (16; 116) aus einer Position, in der sie mit der Kupplungsstange (15; 115) zusammenwirkt, in eine Position bewegt werden kann, in welcher sie nicht mit der Kupplungsstange (15; 115) zusammenwirkt.

4. Tauchbehandlungsanlage nach Anspruch 2, **dadurch gekennzeichnet, dass** die Kupplungsstange (15; 115) aus einer Position, in der sie mit der Kulissenführung (16; 116) zusammenwirkt, in eine Position bewegt werden kann, in welcher sie nicht mit der Kulissenführung (16; 116) zusammenwirkt.

5. Tauchbehandlungsanlage nach einem der vorhergehenden Ansprüche, **dadurch gekennzeichnet, dass** die Drehkette (12; 112) in Längsrichtung bewegbar ist.

## Claims

1. Dip coating system comprising
a) at least one dip coating tank (1; 101) which can be filled with a treatment fluid, in particular with fluid paint, into which the articles (2) to be coated, in particular vehicle bodies, can be dipped;
b) a conveyor system (3, 10; 103, 110), which can displace the articles (2) to be treated to the dip coating tank (1; 101), into the interior of the dip coating tank (1; 101), out of the dip coating tank (1; 101) and away therefrom and comprises:
ba) at least one trolley (3; 103) which has a fastening device (7; 107) which can be rotated around an axis of rotation, to which fastening device at least one article (2) can be fastened;
bb) a rotating device (11, 12; 111, 112) with which the fastening device (7; 107) can be rotated in certain sections of the movement path of the trolley (3);
bc) at least one driven traction chain (10; 110) extending parallel to the movement path of the trolley (3; 103);
wherein
c) the rotating device (11, 12; 111, 112) comprises:
ca) at least one sprocket wheel (1; 111; 112) that can be connected to the fastening device (7; 107) in a rotation-locking manner which is arranged coaxial to the axis of rotation of the fastening device (7; 107);
cb) at least one rotation chain (12; 112) which extends parallel to the movement direction of the trolley (3; 103) with which the sprocket wheel (11; 111) cams,
wherein the rotation chain (12; 112) extends in the movement direction of the trolley (3; 103) over a section, in which a rotation movement should take place and wherein an adjustable coupling (14; 114) is provided, which in a first rotation direction does not establish a rotation connection between sprocket wheel (11; 111) and fastening device (7; 107) in a first position and establishes a rotation connection between sprocket wheel (11; 111) and fastening device (7; 107) in a second position, and
the coupling (14; 114) has a third position, in which a rotation connection is established between the sprocket wheel (11; 111) and the fastening device (7; 107) in a second rotation direction opposed to the first rotation direction.

2. Dip coating system according to Claim 1, **characterised in that** the coupling (14; 114) is actuatable via a coupling rod (15; 115) which cooperates with at least one guide mechanism (16), which is arranged in a stationary manner at a section of the movement path of the trolley (3; 103), in which a rotation should take place.

3. Dip coating system according to Claim 2, **characterised in that** the guide mechanism (16; 116) can be displaced from a position, in which it cooperates with the coupling rod (15; 115), into a position, in which it does not cooperate with the coupling rod (15; 115).

4. Dip coating system according to Claim 2, **characterised in that** the coupling rod (15; 115) can be displaced from a position, in which it cooperates with the guide mechanism (16; 116), into a position, in which it does not cooperate with the guide mechanism (16; 116).

5. Dip coating system according to any one of the preceding claims, **characterised in that** the rotation chain (12; 112) is displaceable in the longitudinal direction.

## Revendications

1. Système de traitement par immersion comprenant :
a) au moins un bassin d'immersion (1 ; 101), qui peut être rempli avec un liquide de traitement, notamment avec un vernis liquide, dans lequel les objets à traiter (2), notamment des carrosseries de véhicules, peuvent être immergés ;
b) un système de transport (3, 10 ; 103, 110), qui peut déplacer les objets à traiter (2) en direction du bassin d'immersion (1 ; 101), dans l'espace intérieur du bassin d'immersion (1 ; 101), hors du bassin d'immersion (1 ; 101) et à distance de celui-ci, et comporte :
ba) au moins un chariot de transport (3 ; 103), qui comprend un appareil de fixation (7 ; 107) pouvant être tourné autour d'un axe de rotation, sur lequel au moins un objet (2) peut être fixé ;
bb) un appareil de rotation (11, 12 ; 111, 112), avec lequel l'appareil de fixation (7 ; 107) peut être tourné dans des sections déterminées de la trajectoire de déplacement du chariot de transport (3) ;
bc) au moins une chaîne de traction (10 ; 110) entraînée, s'étendant parallèlement à la trajectoire de déplacement du chariot de transport (3 ; 103) ;
c) l'appareil de rotation (11, 12 ; 111, 112) comportant :
ca) au moins une roue à chaîne (11 ; 111 ; 112) pouvant être reliée de manière fixe en rotation avec l'appareil de fixation (7 ; 107), qui est agencée coaxialement à l'axe de rotation de l'appareil de fixation (7 ; 107) ;
cb) au moins une chaîne de rotation (12 ; 112) s'étendant parallèlement à la direction de déplacement du chariot de transport (3 ; 103), avec laquelle la roue de chaîne (11 ; 111) s'engrène,
la chaîne de rotation (12 ; 112) s'étendant dans la direction de déplacement du chariot de transport (3 ; 103) sur une section, dans laquelle un mouvement de rotation doit avoir lieu, et un accouplement réglable (14 ; 114) étant prévu, qui ne produit dans une première position aucune liaison de rotation entre la roue à chaîne (11 ; 111) et l'appareil de fixation (7 ; 107) et produit dans une deuxième position une liaison de rotation entre la roue à chaîne (11 ; 111) et l'appareil de fixation (7 ; 107) dans un premier sens de rotation, et
l'accouplement (14 ; 114) possédant une troisième position, dans laquelle une liaison de rotation est produite entre la roue à chaîne (11 ; 111) et l'appareil de fixation (7 ; 107) dans un deuxième sens de rotation, opposé au premier sens de rotation.

2. Système de traitement par immersion selon la revendication 1, **caractérisé en ce que** l'accouplement (14 ; 114) peut être actionné par l'intermédiaire d'une tige d'accouplement (15 ; 115), qui coopère avec au moins un guide à coulisse (16), qui est agencé de manière stationnaire sur une section de la trajectoire de déplacement du chariot de transport (3 ; 103), dans laquelle une rotation doit avoir lieu.

3. Système de traitement par immersion selon la revendication 2, **caractérisé en ce que** le guide à coulisse (16 ; 116) peut être déplacé d'une position, dans laquelle il coopère avec la tige d'accouplement (15 ; 115), dans une position, dans laquelle il ne coopère pas avec la tige d'accouplement (15 ; 115).

4. Système de traitement par immersion selon la revendication 2, **caractérisé en ce que** la tige d'accouplement (15 ; 115) peut être déplacée d'une position, dans laquelle elle coopère avec le guide à coulisse (16 ; 116), dans une position, dans laquelle elle ne coopère pas avec le guide à coulisse (16 ; 116) .

5. Système de traitement par immersion selon l'une quelconque des revendications précédentes, **caractérisé en ce que** la chaîne de rotation (12 ; 112) est déplaçable dans la direction longitudinale.
